# EUROPEAN PATENT APPLICATION

(11) **EP 1 113 653 A2**
(43) Date of publication of application: **04.07.2001**
(21) Application number: 00128240.9
(22) Date of filing: 27.12.2000
(51) Int. Cl.: H04M 1/65, H04M 1/725, H04M 19/04

(54) **Cellular phone system with personalized message recorder reproducer unit**

(30) Priority: 29.12.1999 AR 9906814
(71) Applicant: Pigni, Oscar Marcelo, 1426 Buenos Aires (AR)
(72) Inventor: Pigni, Oscar Marcelo, 1426 Buenos Aires (AR)
(74) Representative: Fernandez Lerroux, Aurelio

(57) **Abstract**

This system which has been incorporated into the structure containing the cellular phone circuit, or the cellular phone battery circuit enables to identify a ringing phone surrounded by some other equal phone devices and which alarm sounds as a phone call is received. They transmit a personalized message that can be recorded by the user, i.e. calling his name ("John, you have a phone call") or using his preferred melody. Two models can be manufactured, one for conventional phones, containing vibrator battery function, that is to say containing four contact terminals, and the other one aimed at modern telephones having more contact terminals for the battery, with a microprocessor controlling the phone functions being able to handle the address and data bus of the personalized message recorder reproducer unit with the object, that is to say, a spoken message for each phone function, i.e. it advises the user whether he has messages in his voice mail, battery status, signal reception level, name of the person calling him detected by his ID. The advantage of this model is that it may also be used by blind people or people who are not able to see cellular functions displayed on their screens. Another option would he to use it while driving a car in order not to take the eyes off the view to listen to the person calling you, being also able this way to operate functions or to listen to the cellular phone messages.
Another advantage of this system is that messages remained recorded for a period of 100 years, when there is no current supply or the battery is completely discharged.

## Description

### BACKGROUND OF THE INVENTION

### FIELD OF THE INVENTION

This invention refers to a system for cellular phones with personalized message recorder reproducer unit.
This system which has been incorporated into the structure containing the cellular phone circuit, or the cellular phone battery circuit enables to identify a ringing phone surrounded by some other equal phone devices and which alarm sounds as a phone call is received. They transmit a personalized message that can be recorded by the user, i.e. calling his name ("John, you have a phone call") or using his preferred melody. Two models can be manufactured, one for conventional phones, placing the system inside the box containing the batteries, with four terminals making contact with the cellular phone and which include the vibrator battery function; and the other one aimed at modern telephones which already contain this system in their circuits, or which may have more contact terminals for the system, when included in the box battery with the a microprocessor controlling the phone functions, to be able to handle the address and data bus of the personalized message recorder reproducer unit with the object, that is to say, a spoken message ―which can be recorded by the manufacture company- or instead with user's voice, for each phone function, i.e. it advises the user whether he has messages in his voice mail, battery status, signal reception level, name of the person calling him detected by his ID. The advantage of this model is that it may also be used by blind people or people who are not able to see properly. Another option would be to use it while driving a car in order not to take the eyes öff the view to listen to the person calling you, being also able this way to operate functions or to listen to the cellular phone messages.

### RELATED BACKGROUND ART

So far, a great variety of sounds and melodies are known in the art, as a phone call, a mail or messages in the voice mail are received or even for any cellular phone function.
Unlike the others, this system enables to identify a ringing phone surrounded by some other equal phone devices and which alarm sounds similarly. It is also a solution for people who are unable to see properly or even for blind people who are not able to identify fanctions or messages displayed in the cellular phone screen. Another option would be to use it while driving a car in order not to take the eyes off the view to listen to the person calling you, being also able this way to operate functions or to listen to the cellular phone messages.

The documents spreading my knowledge on the subject are as follows: MANUAL DE SEMICONDUCTORES DE SILICIO, Texas Instruments ― TECHNICAL EDITION 82/83 © Copyright 1982 Ediciones EMEDE S.A. ARGENTINA.
ISD Product Datasheet and Website : www.isd.com

### BRIEF SUMMARY OF THE INVENTION

The purpose of the invention is achieved by a recorder-reproducer circuit which may be able to record one or several messages, and such messages may be directed through the address and data bus in the microprocessor contained in the cellular phone. Also, it is necessary that this circuit may keep the messages recorded preventing them from being erased in case of no current supply or low voltage.

### BRIEF DESCRIPTION OF THE DRAWINGS

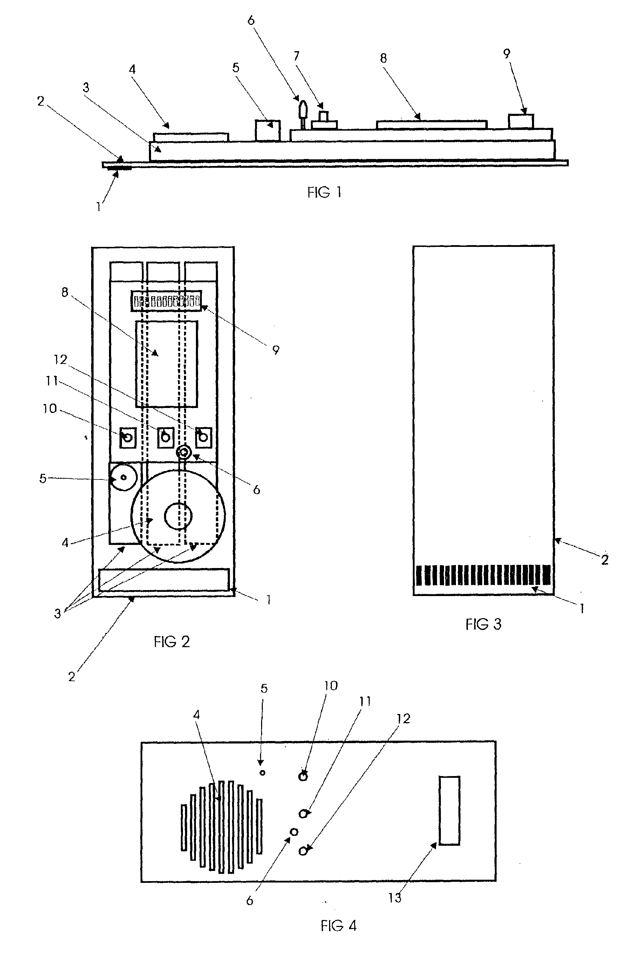

(Figure 1) Side view of the system assembled over the cellular phone batteries without the cap protecting it.

(Figure 2) Top view of the system assembled over the cellular phone batteries without the cap protecting it.

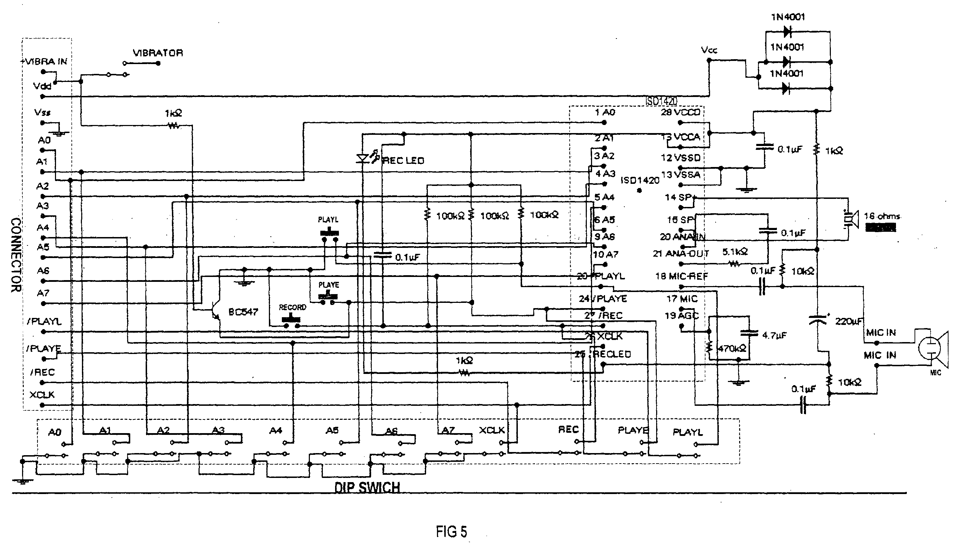

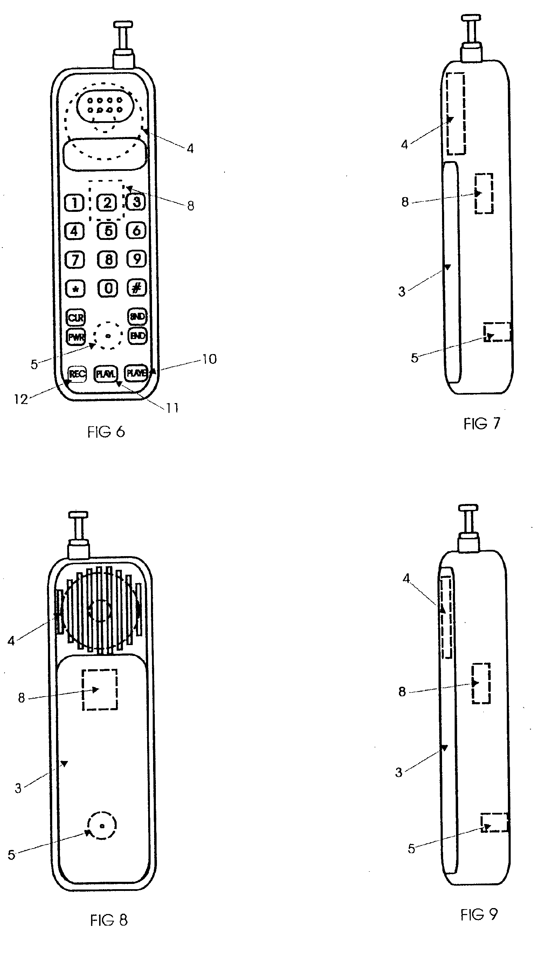

(Figure 3). Rear view of the battery system . (Figure 4) Top view of the system cap where perforations and holes can be observed. (Figure 5) View of the electronic circuit. (Figure 6) Front view of the system which is included inside the cellular phone box. (Figure 7) Side view of the system included inside the cellular phone box. (Figure 8) Rear view of the system included inside the cellular phone box. (Figure 9) Side view of the system when the electronic circuit is contained in the cellular phone structure and the speaker is included in the box containing the batteries.

### DETAILED DESCRIPTION OF THE PREFERRED EMBODIMENTS

(1),Connection contacts. (2), Plastic base. (3), Batteries. (4), Speaker. (5), Microphone. (6), Light emitting diode of record. (7), Pulser. (8), Chip in board circuit. (9), Dip switches.(10), PLAYE pulser. (11), PLAYL pulser. (12), Record pulser. (13) Cap

Components are as follows:

| | | |
|---|---|---|
| **INTEGRATED CIRCUITS** | **QTY** | **DESCRIPTION** |
| ISD1420 | 1 | CHIP-CORDER |
| **CAPACITORS** | **QTY** | **DESCRIPTION** |
| 0.001 mf | 1 | POLYESTER |
| 4,7 Mf | 1 | POLARIZED |
| 0,1mf | 4 | POLYESTER |
| 220 Mf | 1 | POLARIZED |
| **DIODES** | **QTY** | **DESCRIPTION** |
| LIGHT EMITING DIODES | 1 | RED 3mm |
| IN4001 | 3 | DIODES |
| **RESISTANCES** | **QTY** | **DESCRIPTION** |
| 470K | 1 | 1/8 Watt |
| 100 K | 3 | 1/8 Watt |
| 5.1K | 1 | 1/8 Watt |
| 10K | 2 | 1/8 Watt |
| 1K | 3 | 1/8 Watt |
| **PULSERS** | **QTY** | **DESCRIPTION** |
| NORMAL OPEN | 3 | FLAT |
| **SPEAKER** | **QTY** | **DESCRIPTION** |
| 16 Ohms of Maylar | 1 | DIAMETER 1½" |
| **MICROPHONE** | **QTY** | **DESCRIPTION** |
| ELECTRET | 1 | MINIATURE |
| **SWITCH** | **QTY** | **DESCRIPTION** |
| SWITCH | 12 | DIP |
| SWITCH | 1 | INVERTER |

In case of manufacturing the system inside the box containing the batteries, the DIP switches allow to use the same battery for conventional telephones where A0-A7 and XCLK should be connected to ground, and disconnected from ground in the case of modern telephones. Also, a double inverter switch may be incorporated n order to choose whether you want to use the message and the battery vibrator at the same time or not.

Having my invention been described and by bringing it into practice, I hereby claim my exclusive right and ownership: CELLULAR PHONE SYSTEM WITH PERSONALIZED MESSAGE RECORDER REPRODUCER UNIT
The invention is featured by:

## Claims

1. As a first option, by a recorder-reproducer integrated circuit inside the box containing the batteries. In the case of a second option, the system is included inside the cellular phone box, and in a third option, the system electronic circuit would be contained in the cellular phone structure while the speaker would be included in the box containing the batteries. The first option allows to record a spoken message or melody for conventional telephones featuring vibrator function, to reproduce such a message or melody by way of the speaker whenever there is an incoming phone call, and to activate the vibrator function. Second and third options allow different messages or melodies to be reproduced through the speaker whenever a telephone function is selected, and that these messages or melodies may be directed, in order to be recorded or reproduced, through the address and data bus in the microprocessor included by the manufacturer in modern cellular phones; and also that messages may be remained recorded for a period of 100 years, without erasing in case of no current supply or low voltage.
